(19) **Europäisches Patentamt / European Patent Office / Office européen des brevets**

(11) **EP 2 076 753 B1**

(12) **FASCICULE DE BREVET EUROPEEN**

(45) Date de publication et mention de la délivrance du brevet:
**08.12.2010 Bulletin 2010/49**

(51) Int Cl.:
**G01N 3/08** (2006.01)

(21) Numéro de dépôt: **07821200.8**

(22) Date de dépôt: **11.10.2007**

(86) Numéro de dépôt international:
**PCT/EP2007/060833**

(87) Numéro de publication internationale:
**WO 2008/043813 (17.04.2008 Gazette 2008/16)**

(54) **MOYEN DE CARACTERISATION COMBINE DE LA DEFORMATION DE CROISSANCE ET DE FLUAGE D'UN MATERIAU ET PROCEDE DE CARACTERISATION METTANT EN OEUVRE UN TEL MOYEN**

KOMBINIERTE MITTEL ZUR CHARAKTERISIERUNG DER WACHSTUMS- UND KRIECHVERFORMUNG EINES MATERIALS SOWIE CHARAKTERISIERUNGSVERFAHREN MIT VERWENDUNG SOLCHER MITTEL

COMBINED MEANS FOR CHARACTERISING THE GROWTH AND CREEP DEFORMATION OF A MATERIAL AND CHARACTERISATION METHOD USING SUCH MEANS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **11.10.2006 FR 0654197**

(43) Date de publication de la demande:
**08.07.2009 Bulletin 2009/28**

(73) Titulaire: **Commissariat à l'Énergie Atomique et aux Énergies Alternatives 75015 Paris (FR)**

(72) Inventeur: **CARASSOU, Sébastien F-91470 Limours (FR)**

(74) Mandataire: **Ilgart, Jean-Christophe BREVALEX 3, rue du Docteur Lancereaux 75008 Paris (FR)**

(56) Documents cités:
**FR-A- 1 329 078     FR-A- 2 064 761 US-A- 3 803 365**

- **R.A HOLT, N. CHRISTODOULOU: "anisotropy of in-reactor deformation of Zr-2.5Nb pressure tubes" JOURNAL OF NUCLEAR MATERIALS, no. 317, 2003, pages 256-260, XP002432910 cité dans la demande**
- **KADDOUR D ET AL: "Experimental determination of creep properties of Zirconium alloys together with phase transformation" SCRIPTA MATERIALIA, ELSEVIER, AMSTERDAM, NL, vol. 51, no. 6, septembre 2004 (2004-09), pages 515-519, XP004517742 ISSN: 1359-6462**
- **COCKERAM ET AL: "Tensile properties and fracture mode of a wrought ODS molybdenum sheet following fast neutron irradiation at temperatures ranging from 300<o>C to 1000<o>C" JOURNAL OF NUCLEAR MATERIALS, AMSTERDAM, NL, vol. 346, no. 2-3, 15 novembre 2005 (2005-11-15), pages 165-184, XP005125691 ISSN: 0022-3115**

**Description**

## DOMAINE TECHNIQUE ET ART ANTÉRIEUR

La présente invention se rapporte à un moyen de caractérisation pour caractériser le comportement mécanique de matériaux formant des éléments de structure, en particulier le fluage et la croissance, destinés à être utilisés dans des environnements irradiés, et plus généralement, à un moyen de caractérisation pour caractériser le comportement mécanique d'un matériau utilisé dans un environnement donné, par exemple dans une installation nucléaire, en particulier les déformations résultant de contraintes appliquées au matériau dans son environnement et des déformations résultant de l'environnement seul.

La tenue mécanique des structures est un aspect très important de la sûreté des installations nucléaires. Il est alors essentiel de connaître précisément les variations dimensionnelles induites par l'environnement dans lequel se trouvent ces structures, par exemple les contraintes mécaniques, la température, l'irradiation, etc.

Dans ce contexte, le fluage et la croissance des éléments soumis à l'irradiation neutronique en réacteur sont particulièrement étudiés.

Le fluage correspond à l'évolution dimensionnelle dans le temps en présence d'une charge mécanique, et la croissance correspond à l'évolution dimensionnelle dans le temps, pouvant se produire sous flux même en l'absence de chargement mécanique, sous irradiation.

Les éléments sont, par exemple en alliage de zirconium présents dans l'assemblage combustible des réacteurs à Eau sous Pression, et peuvent former des tubes guides des crayons combustibles, les tubes de forces présents dans les réacteurs de type CANDU, etc.

L'étude et la caractérisation de ces comportements mécaniques s'effectuent de manière habituelle par la réalisation d'essais en réacteur de recherche (par exemple Osiris en France), ou même exceptionnellement dans certains cas en réacteur électrogène.

Lorsque l'on souhaite seulement caractériser la croissance, les éprouvettes utilisées sont en général des tronçons de tubes ou des éprouvettes découpées dans des plaques, placées sous flux sans mise en contrainte mécanique, et dont on mesure l'évolution de la longueur au cours du temps, en général par des déchargements périodiques. Cette technique est par exemple décrite dans les documents « Influence of Zirconium Alloy Chemical Composition on Microstructure Formation and Irradiation Induced Growth », V. N. Shishov et al, Zirconium in the Nuclear Industry : 13th International symposium, ASTM STP 1423, G. D. Moan and P. Rudlings eds, 2002, pp.758-779, et « Influence of Structure-Phase State of Nb Containing Zr Alloys on Irradiation Induced Growth », V. N. Shishov et al, Journal of ASTM International, September 2005, Vol.2, No. 8.

Dans le cas où l'on souhaite caractériser à la fois le fluage et la croissance simultanément, on utilise fréquemment deux types d'éprouvettes placés simultanément dans l'environnement considéré.

Les éprouvettes du premier type sont soumises à un chargement mécanique, celles-ci sont donc sujettes à la fois au phénomène de fluage et de croissance, et les éprouvettes du deuxième type ne sont pas soumises à ce chargement mécanique, elles ne sont donc sujettes qu'à cette croissance éventuelle. Les mêmes mesures effectuées périodiquement sur les éprouvettes non chargées et chargées permettent alors de quantifier respectivement la déformation de croissance, et la déformation cumulée de croissance et de fluage. Une soustraction permet alors de déterminer la composante de fluage d'irradiation pure. Cette technique est, par exemple décrite dans « Anisotropy of in-reactor deformation of Zr-2.5Nb pressure tubes », R. A. Holt , N. Christodoulou , A. R. Causey, Journal of Nuclear Materials 317 (2003) 256-260, et dans le document « Irradiation creep and growth of guide thimble alloys », P. Yvon, J. Diz and N. Ligneau International Symposium of contribution of materials Investigation to the Resolution of Problems Encountered in Pressurized Water Reactors, (Fontevraud, France, September 14-18, 1998). Dans ce dernier document, sont représentées l'éprouvette soumise à une contrainte et l'éprouvette non soumise à une contrainte, cette dernière appelée tuile entoure l'éprouvette soumise à une contrainte.

Ces essais nécessitant des irradiations sont très coûteux, par ailleurs l'utilisation d'au moins deux éprouvettes pose des problèmes d'encombrement.

« Les documents FR2064761, US3803365 décrivent la caractérisation du fluage sous irradiation en mettant en oeuvre une éprouvette de référence et une éprouvette destinée à être chargée. »,

C'est par conséquent un but de la présente invention d'optimiser au mieux la charge expérimentale, i.e. le nombre d'éprouvettes à utiliser pour réaliser les essais.

C'est par conséquent un but de la présente invention d'offrir des éprouvettes ou moyens de caractérisation des comportements mécaniques en fluage et en croissance d'éléments de structure disposés dans un environnement donné, d'encombrement réduit afin de réduire l'encombrement total de la charge expérimentale en réacteur nécessaire pour obtenir une quantité d'information donnée avec des coûts réduits.

C'est également un but de la présente invention d'offrir des éprouvettes de caractérisation permettant de réduire la quantité d'opérations de télémanipulation nécessaires en cellule chaude, notamment dans le cas de mesures dimensionnelles entre les cycles d'irradiations, pour réduire l'encombrement, et aussi pour minimiser les risques de pertes d'information inhérentes à ce type d'opérations.

## EXPOSÉ DE L'INVENTION

Le but précédemment énoncé est atteint par une éprouvette unique comportant des premières zones aptes à être déformées par fluage et croissance et des deuxièmes zones distinctes des premières aptes à être déformées par croissance uniquement.

En d'autres termes, l'éprouvette selon la présente invention est monolithique et comporte des zones géométriques distinctes aptes à être sujettes aux différents phénomènes à quantifier, et permettant ainsi de s'affranchir de l'utilisation de deux objets distincts. L'éprouvette selon la présente invention permet donc de quantifier les deux phénomènes de fluage et de croissance sur un seul et même objet, ce qui permet de réduire l'encombrement total et de diminuer les opérations de télémanipulation.

L'éprouvette selon la présente invention comporte un corps de forme tubulaire dont les extrémités longitudinales forment une surface continue et une zone médiane comportant des évidements séparés par des jambes raccordant les deux extrémités du corps et des pattes raccordées à une seule extrémité.

Lorsqu'une contrainte axiale est appliquée aux extrémités, les jambes raccordant les extrémités du corps sont soumises à la fois à un fluage et à une croissance. Tandis que les jambes raccordées à une seule extrémité ne sont soumises qu'à une croissance, car elles ne « ressentent » pas la charge axiale.

Dans un exemple préféré de réalisation, l'éprouvette comporte sept zones, dont cinq sont découpées dans le matériau à étudier et deux sont des pièces rapportées :

- deux zones d'extrémités permettant la transmission de l'effort,
- une partie centrale,
- deux zones de liaison entre les zones d'extrémités et la partie centrale, et
- deux éléments de rigidification des zones d'extrémités, qui sont avantageusement insérés dans les zones d'extrémité de l'éprouvette

La présente invention a alors principalement pour objet un moyen de caractérisation d'une déformation de fluage et d'un déformation de croissance d'éléments de structure destinés à être utilisés dans un environnement apte à provoquer des déformations par croissance et par fluage selon au moins une direction axiale, comportant des premières zones aptes à être déformées par fluage et par croissance et des deuxièmes zones distinctes des premières zones aptes à être déformées par croissance, lesdites deuxièmes zones permettant une mesure de la déformation de croissance seule.

Dans un exemple de réalisation, les deuxièmes zones peuvent être aptes à être déformées par fluage, lesdites deuxièmes zones permettant alors une mesure de la déformation de fluage seule.

Dans un exemple particulièrement avantageux, le moyen de caractérisation comporte un corps tubulaire muni à chacune de ses extrémités d'une tête en forme de couronne pleine, une partie médiane entre les deux têtes comportant des évidements s'étendant sensiblement axialement, lesdits évidements étant séparés par aux moins deux jambes, dites jambes porteuses s'étendant sensiblement axialement et raccordant les deux têtes et des deuxièmes jambes, dites jambes non porteuses s'étendant sensiblement axialement raccordées à une seule desdites deux têtes.

Les jambes porteuses ont les mêmes dimensions, afin d'avoir une déformation équilibrée du moyen d'essai.

Les jambes porteuses et non porteuses peuvent comporter deux repères respectivement en saillie d'au moins une de leur face délimitant les évidements, afin de faciliter les mesures de variation de dimension des jambes.

Les repères ont par exemple un profil en pointe.

Le moyen de caractérisation peut comporter des congés de raccordement entres les deux extrémités longitudinales desdites jambes porteuses et les têtes et entre les deux extrémités desdites jambes non porteuses et les têtes, afin de réaliser un raccordement doux entre les têtes et les jambes.

Une extrémité longitudinale de chacune des jambes non porteuses peut être séparée d'une tête à laquelle elle n'est pas raccordée par un espacement, avantageusement au niveau d'un base du congé de raccordement correspondant, afin d'avoir une longueur de jambe maximale.

Le moyen de caractérisation peut également comporter des moyens de rigidification des têtes. Ces moyens de rigidification forment, par exemple des bouchons introduits dans les têtes.

Le moyen de caractérisation selon la présente invention, en particulier les jambes porteuses et non porteuses, est par exemple réalisé par électroérosion à fil.

La présente invention a également pour objet un procédé de caractérisation des comportements de déformation au fluage et à la croissance d'un élément dans un environnement donné, mettant en oeuvre un moyen de caractérisation selon la présente invention, comportant les étapes :

a) de mesure des dimensions du moyen de caractérisation,

b) de mise en place du moyen de caractérisation dans une zone apte à reproduire l'environnement donné,

c) d'application des conditions dont on souhaite mesurer l'influence sur le moyen de caractérisation,

d) de mesure des dimensions caractéristiques du moyen de caractérisation,

e) de détermination de la déformation due à la croissance avec les variations des dimensions des deuxièmes zones, et de déduction de la déformation due au fluage avec les variations des dimensions des premières zones.

La présente invention a également pour objet un procédé, dans lequel lors des étapes b) et d), on mesure la distance entre les pattes en saillie des jambes.

La présente invention a également pour objet un procédé, dans lequel lors de l'étape c), les sollicitations sont la température, l'irradiation et une charge mécanique.

Lors de l'étape e), on peut prévoir de déterminer la déformation due à au fluage avec les variations des dimensions des deuxièmes zones.

## BRÈVE DESCRIPTION DES DESSINS

La présente invention sera mieux comprise à l'aide de la description qui va suivre et des dessins annexés, sur lesquels :

- la figure 1 est une vue en perspective d'une éprouvette selon la présente invention,
- les figures 2A et 2B sont des vues partielles de l'éprouvette de la figure 1,
- les figures 3A et 3B sont des vues de détail de la figure 1,
- la figure 4A est une vue de côté de l'éprouvette de la figure 1,
- la figure 4B est une autre vue de côté de l'éprouvette de la figure 1 tournée à 90° par rapport à la vue de la figure 4A,
- la figure 5 est une vue en coupe transversale de l'éprouvette de la figure 1,
- les figures 6A à 6D sont des vues schématiques en perspective de différents exemples de réalisation d'une éprouvette selon la présente invention.

## EXPOSÉ DÉTAILLÉ DE MODES DE RÉALISATION PARTICULIERS

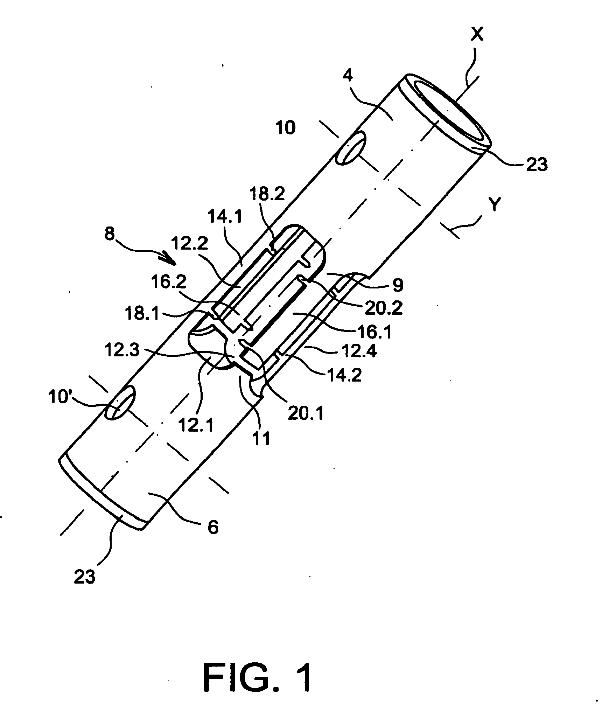

Sur la figure 1, on peut voir un exemple de réalisation d'une éprouvette selon la présente invention. Celle-ci peut, par exemple permettre de caractériser mécaniquement en fluage et en croissance le comportement d'éléments d'assemblage comme les tubes guides dans un environnement irradié sous charge.

Pour cela, l'éprouvette comporte un corps 2 de forme tubulaire d'axe longitudinal X muni d'une première 4 et d'une deuxième 6 extrémité, appelées également têtes, destinées à transmettre l'effort extérieur exercé par tout dispositif expérimental approprié à une zone médiane 8, dite également zone utile de l'éprouvette.

Les têtes 4, 6 ont la forme de bague pleine. Tandis que la partie médiane 8 est ajourée. La différence de section porteuse entre la zone utile 8 et les têtes 4, 6 assure que la déformation est localisée dans la zone utile 8, et non dans les têtes 4, 6. On entend par section porteuse, la section apte à supporter un effort selon l'axe X.

Dans l'exemple représenté, il est prévu d'appliquer un effort aux têtes 4, 6, exercé par un dispositif de traction (non représenté) par l'intermédiaire de goupilles (non représentées) destinées à pénétrer dans des paires de trous 10, 10' pratiquées dans les têtes selon un axe transversal Y, Y' respectivement, sécant à l'axe X.

Les goupilles sont également destinées à pénétrer dans un alésage du dispositif de traction lorsque celui-ci pénètre dans l'éprouvette ou dans des trous, lorsque celui-ci entoure l'éprouvette.

On pourrait prévoir d'autres modes d'accrochage entre les têtes 4, 6 et le dispositif de traction, par exemple au moyen d'un taraudage pratiqué dans les têtes et dans lequel serait vissée une extrémité filetée du dispositif de traction.

La partie médiane 8 ou zone utile de l'éprouvette est la zone permettant de mesurer la croissance et les effets du fluage du matériau formant l'éprouvette. Comme expliquer précédemment, les têtes sont réalisées de manière suffisamment rigide pour transmettre entièrement la charge à l'éprouvette sans se déformer. Seule la zone utile 8 se déforme, cette déformation est alors représentative du comportement réel de l'élément de structure à caractériser.

De manière avantageuse, l'éprouvette selon l'invention comporte de moyens 23 pour rigidifier les têtes 4,6 afin d'éviter leur déformation lors de l'application de la charge. Dans l'exemple représenté, ces moyens de rigidification sont formés par des bouchons insérés dans les extrémités ouvertes des têtes 4,6. La matière des bouchons est choisie pour augmenter la rigidité des têtes de l'éprouvette, sans cependant interagir de manière significative avec l'éprouvette. Les bouchons peuvent par exemple être réalisés en alliages de zirconium usinés dans des barres pleines.

Ces bouchons permettent de renforcer encore la rigidité des têtes 4, 6 vis-à-vis de la zone utile 8, en augmentant artificiellement l'épaisseur du tube au niveau des têtes. Le diamètre de l'éprouvette n'est par ailleurs pas augmenté.

On pourrait envisager d'utiliser comme moyen de rigidification, des bagues entourant les têtes.

Les têtes 4, 6 se raccordent aux extrémités de la partie porteuses par des congés de raccordement 9, 11 respectivement. Ces congés 9, 11 assurent une transition douce et sans discontinuité géométrique entre la partie utile 8 et les têtes 4,6, évitant l'apparition de zones de faiblesses.

La zone utile 8 comporte, dans l'exemple représenté, au moins quatre lumières 12.1, 12.2, 12.3, 12.4 s'étendant selon des axes X1, X2, X3, X4 respectivement, parallèles à l'axe X de l'éprouvette. Les lumières 12.1 à 12.4 sont séparées par deux premières jambes 14.1, 14.2 raccordant les têtes 4, 6 et deux deuxièmes jambes 16.1, 16.2 se raccordant à une seule des têtes 4, 6, dans l'exemple représenté la tête 4.

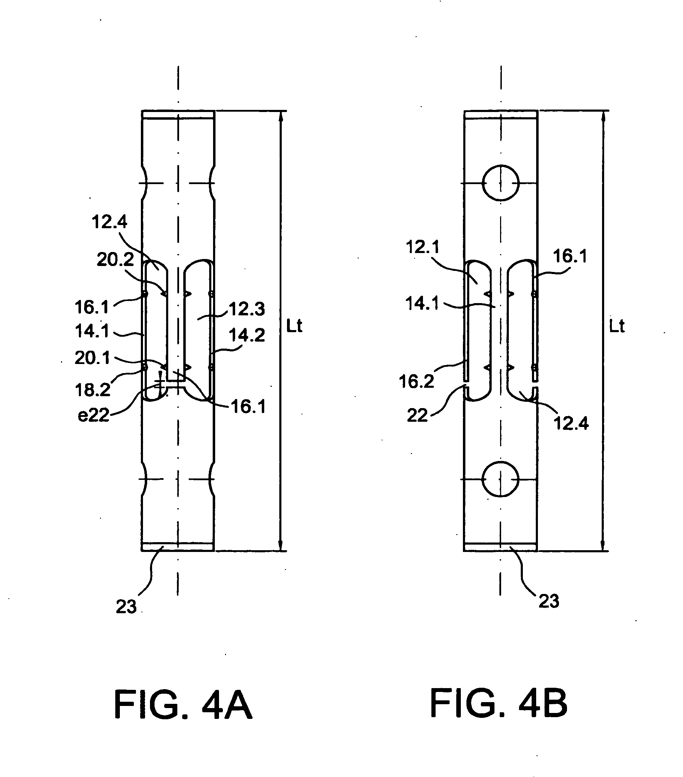

Les deux premières jambes 14.1, 14.2, dont une est particulièrement visible sur la figure 4A, sont diamétralement opposées, ainsi que les deuxièmes jambes 16.1, 16.2, les quatre jambes 14.1, 14.2, 16.1, 16.2 étant réparties angulairement de manière régulière. Ainsi une première jambe 14.1 se trouve entre deux deuxièmes jambes 16.1, 16.2 et inversement.

Cette disposition permet d'équilibrer la déformation de l'éprouvette.

Les premières jambes 14.1, 14.2 sont destinées à permettre de quantifier la déformation résultant du fluage et de la croissance. Tandis que les deuxièmes jambes 16.1, 16.2 sont destinées à quantifier la déformation résultant uniquement de la croissance puisqu'elles ne sont pas soumises à la charge appliquée aux têtes 4, 6.

Les premières jambes seront appelées dans la suite de la description jambes porteuses puisqu'elles sont destinées à supporter une charge mécanique, et les deuxièmes jambes seront désignées jambes non porteuses.

De manière avantageuse, l'éprouvette selon l'invention comporte au moins deux jambes porteuses afin d'assurer une déformation équilibrée de l'éprouvette. Plus de deux jambes porteuses peuvent être prévues suivant les exigences de la caractérisation.

Les jambes porteuses sont avantageusement de mêmes dimensions afin d'améliorer la déformation équilibrée de l'éprouvette.

Les jambes porteuses sont par exemple, obtenues par enlèvement de matière à partir du tube, par usinage par électroérosion à fil par exemple. Celles-ci sont toutes de même longueur Lc calibrée, assurant une contrainte homogène. Par ailleurs, l'épaisseur des jambes porteuses 14.1, 14.2 est celle du tube.

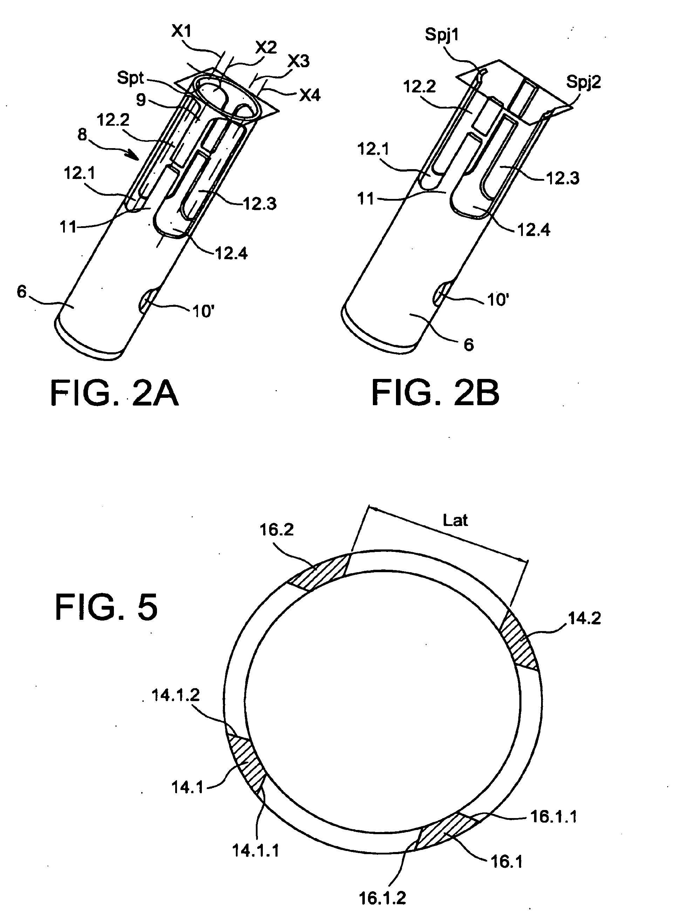

Sur les figures 2A et 2B, sont représentées les sections porteuses, i.e. les surfaces Spt transmettant l'effort au niveau des têtes et les surfaces Spj transmettant l'effort au niveau des jambes porteuses respectivement.

Pour la tête, cette surface Spt correspond à la surface de la section transversale du tube du corps 2. Pour les jambes porteuses, cette surface porteuse Spj correspond à la somme des deux surfaces Spj1 et Spj2 des sections transversales des jambes porteuses 14.1, 14.2 respectivement.

A titre d'exemple, nous allons calculer des surfaces porteuses Spj.

Dans cette configuration, la relation entre une contrainte sigma σ présente dans les jambes porteuses et un effort F appliqué est de manière classique :

$$(\sigma) = F \,/\, Spj \qquad\qquad (I).$$

La section porteuse S est définie par :

$$s = \frac{1}{2} \cdot \pi \cdot \left(r_c{}^2 - r_i{}^2\right) - \left(\sqrt{r_e{}^2 - L'^2} - \sqrt{r_i{}^2 - L'^2}\right) \cdot 4 \cdot L' - r_e{}^2 \cdot \left(2 \cdot A - \sin(2 \cdot A)\right) + r_i{}^2 \cdot \left(2 \cdot B - \sin(2 \cdot B)\right)$$

Et en posant :

$$L' = \left(\frac{LaT}{2}\right)$$

$$A = \operatorname{asin}\left(\frac{L'}{r_e}\right)$$

$$B = \mathrm{asin}\left(\frac{L'}{r_i}\right)$$

- LaT étant la largeur entre les jambes
- Lt étant la longueur totale de l'éprouvette,
- re et ri étant les rayons extérieurs et intérieurs du tube 2,
- LaT étant la largeur totale entre jambes.

A titre d'exemple, pour les dimensions suivantes (mm), qui sont les dimensions classiques d'un tube guide en alliage de zirconium :

L0 est la distance initiale séparant les pointes des deux pattes 18.

$\Phi$ ext est le diamètre extérieur de l'éprouvette, et $\Phi$ moyen est le diamètre moyen de l'éprouvette égale à la somme du diamètre extérieur et du diamètre intérieur divisée par 2.

Lc est égale à 15 mm,
L0 est égale à 10mm,
Lt est égale à 60 mm,
$\Phi$ ext : 12,45 mm
ep : 0,5 mm
ri = 5,725 mm
re = 6, 225 mm
$\Phi$ moyen = 11,95 mm
SO tube (mm$^2$) = 18,771.

On obtient les grandeurs suivantes de la contrainte et de la section porteuse à partir des relations (I) et (II) respectivement (en supposant un effort F = 10 DaN) présent dans les jambes porteuses en fonction de la largeur totale entre les jambes LaT :

| Lat en mm | Spj (mm$^2$) | ($\sigma$) (MPa) |
|---|---|---|
| 2 | 7,376 | 13,6 |
| 3 | 6,353 | 15,7 |
| 4 | 5,307 | 18,8 |
| 6, 5 | 2,512 | 39,8 |

La surface porteuse permet de quantifier la contrainte sous un effort donné.

Ces jambes porteuses servent à quantifier la réponse dimensionnelle du matériau en présence de la sollicitation appliquée, qui peut être notamment la température, l'irradiation et/ou et contrainte mécanique par l'intermédiaire de mesures dimensionnelles entre des repères géométriques par exemple, en utilisant tout type d'appareillage adapté. La réponse dimensionnelle dépend du phénomène de fluage, cumulé au phénomène de croissance.

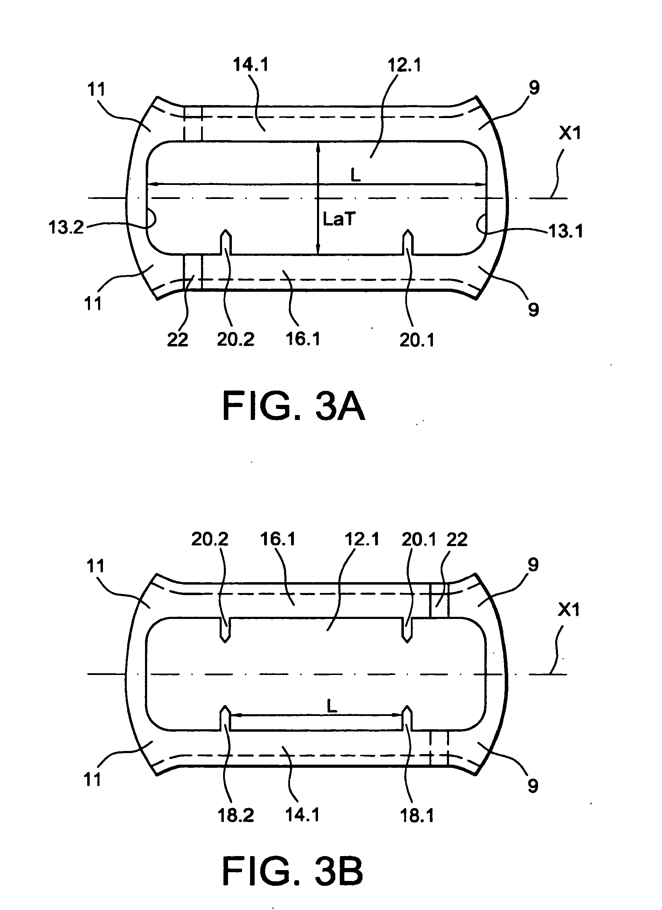

Sur la figure 3A, les repères géométriques sont formés par deux méplats 13.1, 13.2 formant les extrémités de la lumière 12.1, ou, comme cela est représenté sur la figure 3B, par des pattes 18.1, 18.2 en saillie de faces latérales des jambes porteuses 14.1. Ces pattes sont, par exemple réalisées lors de l'usinage des jambes.

On mesure la variation de la distance L séparant les repères 13.1, 13.2 ou 18.1, 18.2.

Les pattes ont avantageusement un profil en pointe pour permettre une mesure précise de leur écartement au niveau des pointes.

Les déformations de croissance et de fluage sont caractérisées par la valeur de $\Lambda$L/L0, LO correspondant à la distance avant déformation entre les repères 13.1, 13.2 ou 18.1, 18.2.

Il est également envisageable de mesurer l'évolution de la largeur des jambes porteuses par tout moyen adapté pour caractériser l'anisotropie de déformation de fluage.

Les jambes non porteuses 16.1, 16.2, dont une est particulièrement visible sur la figure 4B, permettent de quantifier la déformation résultant de la croissance seule. Dans l'exemple décrit, il y a deux jambes non porteuses 16.1, 16.2, obtenues en sectionnant à une hauteur donnée deux des quatre jambes initialement obtenues par usinage, ainsi un espacement 22 sépare une extrémité libre de chaque jambe non porteuse 16.1, 16.2 de la tête à laquelle elles ne sont pas raccordées. La déformation de croissance dans la direction axiale s'obtient par suivi de l'évolution d'une longueur caractéristique axiale, par exemple, comme cela est représenté sur les figures 3A et 3B, cette longueur est la distance séparant des repères géométriques 20.1, 20.2 spécifiquement usinés, identiques ou similaires aux pattes 18.1, 18.2 décrites précédemment en relation avec les jambes porteuses 14.1, 14.2.

On mesure la variation de la distance L' entre les repères 20.1, 20.2.

La déformation de croissance seule est caractérisée par la valeur de $\Lambda L'/L'0$, L'O correspondant à la distance avant déformation entre les repères 20.1, 20.2.

De manière avantageuse, le sectionnement est effectué à la limite du congé de raccordement, afin d'avoir la plus grande longueur de jambe non porteuse possible pour maximiser la base de mesure.

Il n'est pas nécessaire que les deux jambes non porteuses aient les mêmes dimensions.

Comme pour les jambes porteuses, il est également possible de caractériser l'anisotropie de déformation de croissance, en mesurant la déformation de croissance dans la direction circonférentielle, en suivant l'évolution de la largeur de la jambe porteuse par tout moyen adapté.

Par ailleurs, la variation de la largeur e22 de l'espacement 22 peut permettre de quantifier directement l'information de fluage seule, indépendamment de la déformation de croissance. Pour cela on effectue une légère approximation, qui est d'autant plus faible que l'épaisseur sectionnée est faible devant la longueur de la jambe de croissance.

Dans ce cas, la déformation de fluage est caractérisée par la valeur Ae22/Lc, Lc correspondant à la longueur caractéristique de la jambe non porteuse, entre les deux congés de raccordement, en supposant que cette zone entre les deux congés corresponde sensiblement à la zone où à lieu la déformation. Cette méthode de détermination de la déformation de fluage seule est moins précise, puisqu'elle demande de faire des hypothèses, cependant elle peut permettre de déterminer en cours d'essai de caractérisation, la déformation de fluage.

Par exemple la zone utile 8 peut être réalisée par électroérosion à fil.

Suivant le procédé de fabrication, les faces latérales de la même jambe ne sont pas nécessairement parallèles, comme cela est représenté sur la figure 5 où les jambes ont été obtenues par électroérosion à fil.

Les deux faces latérales 14.1.1, 14.1.2 de chaque jambe 14.1 ne sont pas parallèles entre elles, mais la face latérale 14.1.1 appartenant à la jambe porteuse 14.1 est parallèle à la face latérale 16.1.2 de la jambe non porteuse 16.1 en regard. Ceci est vrai pour toutes les faces en regard.

Dans cette configuration, les jambes porteuses et non porteuses ont les mêmes dimensions caractéristiques, ce qui permet de simplifier le procédé de fabrication. Cependant on pourrait prévoir des jambes porteuses dont les dimensions seraient différentes de celles de jambes non porteuses.

Les jambes sont obtenues conjointement par enlèvement de matière suivant deux directions orthogonales : on obtient alors quatre jambes, dont on peut choisir de sectionner deux d'entre elles pour qu'elles ne transmettent plus l'effort comme dans l'exemple représenté.

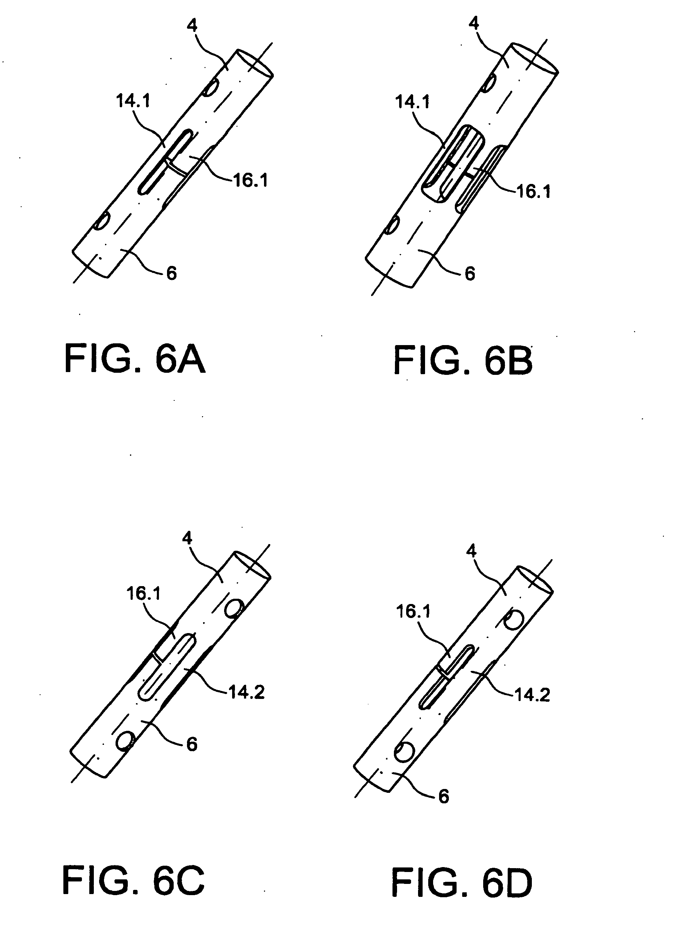

Sur les figures 6A à 6D, on peut voir des éprouvettes dont les lumières et les jambes sont de dimensions différentes. Par ailleurs, dans ces exemples le sectionnement 22 des jambes porteuses est réalisé sensiblement en partie médiane de ces jambes 16.1, 16.2, formant ainsi quatre demi-jambes alignées deux à deux.

L'éprouvette de la figure 6A offre une section utile de 5,97 mm$^2$.

L'éprouvette de la figure 6B offre une section utile de 2,01 mm$^2$.

L'éprouvette de la figure 6C offre une section utile de 3,41 mm$^2$.

L'éprouvette de la figure 6D offre une section utile de 5,97 mm$^2$.

Dans les exemples représentés, les jambes ont une forme rectangulaire, mais on peut envisager qu'elles n'aient pas une largeur constante, et qu'elles comportent un rétrécissement ou un élargissement dans leur partie centrale par exemple.

Il est bien entendu qu'il n'est pas nécessaire d'avoir le même nombre de jambes porteuses et de jambes non porteuses. Par contre, il est préférable que les jambes porteuses soient régulièrement réparties sur la périphérie de l'éprouvette pour éviter un déséquilibrage lors de la sollicitation de l'éprouvette.

Nous allons maintenant décrire le procédé de caractérisation du comportement de l'éprouvette, i.e. de détermination du fluage et de la croissance du matériau composant l'éprouvette.

Le procédé de caractérisation selon la présente invention comporte les étapes :

    a) de mesure des dimensions caractéristiques de l'éprouvette avant toute sollicitation,

    b) de mise en place d'une éprouvette telle que décrite précédemment dans un environnement d'essai,

    c) d'application des conditions dont l'influence est à mesurer,

    d) de mesure des nouvelles dimensions de l'éprouvette,

    e) de détermination de la croissance et de déduction du fluage du matériau composant l'éprouvette.

Lors de l'étape a), l'éprouvette est fixée à un dispositif de chargement mécanique à chacune de ses têtes, par exemple au moyen de goupilles telles que décrites précédemment ou par vissage.

Les dimensions caractéristiques de l'éprouvette sont ensuite mesurées par exemple au moyen d'un laser ou de tout autre dispositif adapté ; il s'agit notamment de la distance entre les repères géométriques formés soient par les méplats 13.1, 13.2, soient par les pattes en saillie 18.1, 18.2 pour les jambes porteuses et par les pattes en saillie 20.1, 20.2 pour les jambes non porteuses. La largeur e22 de l'espacement 22 est également mesurée.

Dans l'étape suivante, l'éprouvette est soumise aux conditions dont l'influence est à mesurer, par exemple l'irradiation, la température et/ou les contraintes mécaniques par activation du dispositif de chargement mécanique pour ces dernières.

Lorsque l'étape de sollicitation est terminée on mesure à nouveau les dimensions de l'éprouvette.

A partir des variations de la distance L' entre les repères géométriques 20.1, 20.2 des jambes non porteuses, on détermine la déformation de croissance. Puis avec la variation de la largeur e22 de l'espacement 22, on en déduit la déformation de fluage. Les mesures de la distance L entre les repères géométriques 13.1, 13.2 ou 18.1, 18.2 sur les jambes porteuses permettent de déterminer la déformation de fluage cumulée à celle de croissance, puisque les jambes porteuses connaissent à la fois le fluage et la croissance. Par différence avec la déformation de croissance obtenue à l'aide des jambes non porteuses, il est possible d'obtenir une autre valeur de la déformation de fluage.

Ainsi avec une seule éprouvette selon la présente invention, donc avec un encombrement expérimental réduit, on caractérise la croissance et le fluage d'éléments de structure.

La présente invention s'applique notamment aux essais mécaniques sous flux menés en réacteur de recherche, réalisées notamment dans le but de qualifier des produits industriels (gainage, tubes guides de l'assemblage combustible).

La forme de l'éprouvette décrite est celle d'un tube est sert donc à caractériser le comportement d'un élément tubulaire. On peut envisager de caractériser des éléments sollicités dans plusieurs directions.

## Revendications

1. Moyen de caractérisation d'une déformation de fluage et d'une déformation de croissance d'éléments de structure destinés à être utilisés dans un environnement apte à provoquer des déformations par croissance et par fluage selon au moins une direction axiale (X), ledit moyen de caractérisation comportant des premières zones (14.1, 14.3) aptes à être déformées par fluage et par croissance et des deuxièmes zones (16.1, 16.2) distinctes des premières zones (14.1, 14.2) aptes à être déformées par croissance, lesdites deuxièmes zones (16.1, 16.2) permettant une mesure de la déformation de croissance seule,

   **caractérisé en ce que** ledit moyen de caractérisation est monolithique et **en ce qu'**il comporte un corps (2) de forme tubulaire s'étendant selon la direction axiale (X) muni à chacune de ses extrémités d'une tête (4, 6) en forme de couronne pleine, une partie médiane (8) entre les deux têtes (6, 8) comportant des évidements (12.1, 12.2, 12.3, 12.4) s'étendant sensiblement axialement, lesdits évidements (12.1, 12.2, 12.3, 12.4) étant séparés par aux moins deux jambes, dites jambes porteuses (14.1, 14.2) s'étendant sensiblement axialement et raccordant les deux têtes et des deuxièmes jambes, dites jambes non porteuses (16.1, 16.2) s'étendant sensiblement axialement et raccordées à une seule des dites deux têtes (4, 6).

2. Moyen de caractérisation selon la revendication 1, dans lequel les deuxièmes zones sont aptes à être déformées par fluage, lesdites deuxièmes zones (16.1, 16.2) permettant une mesure de la déformation de fluage seule.

3. Moyen de caractérisation selon la revendication 1 ou 2, dans lequel les jambes porteuses (14.1, 14.2) ont les mêmes dimensions.

4. Moyen de caractérisation selon l'une des revendications 1 à 3, dans lequel les jambes porteuses (14.1, 14.2) et non porteuses (16.1, 16.2) comportent deux repères (18.1, 18.2, 20.1, 20.2 ) respectivement en saillie d'au moins une de leur face délimitant les évidements (12.1, 12.2, 12.3, 12.4).

5. Moyen de caractérisation selon la revendication 4, dans lequel les repères (18.1, 18.2, 20.1, 20.2 ) ont un profil en pointe.

6. Moyen de caractérisation selon l'une quelconque des revendications 1 à 5, comportant des congés de raccordement (9, 11) entres les deux extrémités longitudinales desdites jambes porteuses (14.1, 14.2) et les têtes (4, 6) et entre les deux extrémités desdites jambes non porteuses (16.1, 16.2) et les têtes (4, 6).

7. Moyen de caractérisation selon la revendication 6, dans lequel une extrémité longitudinale de chacune des jambes non porteuses (16.1, 16.2) est séparée d'une tête (6) à laquelle elle n'est pas raccordée par un espacement (22) au niveau d'une base du congé de raccordement (11) correspondant.

**8.** Moyen de caractérisation selon l'une quelconque des revendications 1 à 7, comportant des moyens de rigidification des têtes (4, 6).

**9.** Moyen de caractérisation selon la revendication précédente, dans lequel les moyens de rigidification forment des bouchons (23) introduits dans les têtes (4, 6).

**10.** Moyen de caractérisation selon l'une quelconque des revendications 1 à 9, dans lequel les jambes porteuses (14.1, 14.2) et non porteuses (16.1, 16.2) sont réalisées par électroérosion à fil.

**11.** Procédé de caractérisation des comportements de déformation au fluage et à la croissance d'un élément dans un environnement donné, mettant en oeuvre un moyen de caractérisation selon l'une quelconque des revendications précédentes, comportant les étapes :

    a) de mesure des dimensions du moyen de caractérisation,
    b) de mise en place du moyen de caractérisation dans une zone apte à reproduire l'environnement donné,
    c) d'application des conditions dont on souhaite mesurer l'influence sur le moyen de caractérisation,
    d) de mesure des dimensions caractéristiques du moyen d'essai,
    e) de détermination de la déformation due à la croissance avec les variations des dimensions des deuxièmes zones, et de déduction de la déformation due au fluage avec les variations des dimensions des premières zones.

**12.** Procédé selon la revendication précédente mettant en oeuvre un moyen de caractérisation selon la revendication 4 ou 5, dans lequel lors des étapes b) et d), on mesure la distance entre les repères en saillie des jambes.

**13.** Procédé selon la revendication 11 ou 12, dans lequel lors de l'étape c), les sollicitations sont la température, l'irradiation et une charge mécanique.

**14.** Procédé selon l'une des revendications 11 à 13, dans lequel lors de l'étape e) on détermine la déformation due au fluage avec les variations des dimensions des deuxièmes zones.

**Claims**

**1.** Means for characterising the creep and growth deformation of structural members to be used in an environment which may induce growth and creep deformations in at least one axial direction (X), said characterising means comprising first zones (14.1, 14.3) which may be deformed by creep and by growth and second zones (16.1, 16.2) distinct from the first zones (14.1, 14.2) which may be deformed by growth, said second zones (16.1, 16.2) allowing measuring of the deformation of growth alone, **characterised in that** said characterising means are monolithic and **in that** they comprise a body (2) of tubular shape extending in the axial direction (X), fitted at each of its extremities with a head (4, 6) in the form of a solid crown, a middle portion (8) between the two heads (6, 8) comprising recesses (12.1, 12.2, 12.3, 12.4) extending substantially axially, said recesses (12.1, 12.2, 12.3, 12.4) being separated by at least two legs, said bearing legs (14,1, 14.2) extending substantially axially and connecting the two heads and second legs, said non-bearing legs (16.1, 16.2) extending substantially axially and connected to only one of said two heads (4, 6).

**2.** The characterising means as claimed in Claim 1, in which the second zones may be deformed by creep, said second zones (16.1, 16.2) allowing measuring of the deformation of creep alone.

**3.** The characterising means as claimed in Claim 1 or 2, in which the bearing legs (14.1, 14.2) have the same dimensions.

**4.** The characterising means as claimed in one of Claims 1 to 3, in which the bearing legs (14.1, 14.2) and non-bearing legs (16.1, 16.2) comprise two guide marks (18.1, 18.2, 20.1, 20.2) respectively projecting from at least one of their faces delimiting the recesses (12.1, 12.2, 12.3, 12.4).

**5.** The characterising means as claimed in Claim 4, in which the guide marks (18.1, 18.2, 20.1, 20.2) have a pointed profile.

**6.** The characterising means as claimed in any one of Claims 1 to 5, comprising files (9, 11) between the two longitudinal extremities of said bearing legs (14.1, 14.2) and the heads (4, 6) and between the two extremities of said non-bearing legs (16.1, 16.2) and the heads (4, 6).

**7.** The characterising means as claimed in Claim 6, in which a longitudinal extremity of each of the non-bearing legs (16.1, 16.2) is separated from a head (6) to which it is not connected by spacing (22) at the revel of a base of the corresponding filet (11).

**8.** The characterising means as claimed in any one of Claims 1 to 7, comprising stiffening means of the heads (4, 6).

**9.** The characterising means as claimed in the preceding claim, in which the stiffening means form plugs (23) introduced into the heads (4, 6).

**10.** The characterising means as claimed in any one of Claims 1 to 9, in which the bearing legs (14.1, 14.2) and non-bearing legs (16.1, 16.2) are made by wire electroerosion.

**11.** A process for characterising the creep and growth deformation behaviour of a member in a given environment, implementing the characterising means as claimed in any one of the preceding claims, comprising the steps of:

a) measuring dimensions of the characterising means,
b) placing the characterising means in a zone for reproducing the given environment,
c) application of conditions, the influence on the characterising means of which are to be measured,
d) measuring dimensions characteristic of the testing means,
e) determination of deformation due to growth with variations in dimensions of the second zones, and deduction of deformation due to creep with the variations in dimensions of the first zones.

**12.** The process as claimed in the preceding claim implementing the characterising means as claimed in Claim 4 or 5, in which the distance between the guide marks projecting from the legs is measured during steps b) and d).

**13.** The process as claimed in Claim 11 or 12, in which the stresses are temperature, irradiation and mechanical load during step c).

**14.** The process as claimed in any one of Claims 11 to 13, in which deformation due to creep with variations in dimensions of the second zones is determined during steep e).

**Patentansprüche**

**1.** Mittel zur Charakterisierung einer kriechbedingten Verformung und einer wachstumsbedingten Verformung von Strukturetementen, die zur Verwendung in einer Umgebung bestimmt sind, welche Verformungen infolge Wachstum und infolge Kriech in wenigstens einer achsialen Richtung (X) hervorrufen können, wobei das Charakterisierungsmittel erste Zonen (14.1, 14.3) umfaßt, welche durch Kriechen und durch Wachstum verformt werden können, sowie von den ersten Zonen unterschiedene zweite Zonen (16.1, 16.2) umfaßt, weiche durch Wachstum verformt werden könnten, wobei die genannten zweiten Zonen (16.1, 16.2) eine Messung allein der Wachstums-Verformung gestatten, **dadurch gekennzeichet, daß** das Charakterisierungsmittel einstöckig - monolithisch ist und daß es einen sich längs der achsialen Richtung (X) erstreckenden rohrförmige Körper (2) umfaßt, der an jedem seiner Enden mit einem Kopf (4, 6) in Form einer ununterbrochenen geschlossenen Krone versehen ist, daß das Mittel des weiteren einen Medianteil (8) zwischen den beiden Knöpfen (6, 8) umfaßt, welcher sich im wesentlichen achsial erstreckende Ausnehmungen (12.1, 12.2, 12.3. 12.4) umfaßt, wobei diese genannten Ausnehmungen (12.1, 12.2, 12.3, 12.4) durch wenigstens zwei Schekel, die als tragende Schenkel bezeichnet sind, getrennt sind, welche sich im wesentlichen achsial ersztrecken und die beiden Köpfe verbinder, sowie zweite, als nicht-tragende Schenkel bezeichnete Schenkel (16.1, 16.2), welche sich im wesentlichem achsial erstrecken und nur mit einem der genannten zwei Köpfe (4, 6) verbunden sind.

**2.** Charakterisierungsmittel nach Anspruch 1, bei welchem die zweiten Zonen durch Kriechen verformbar sind und die genannten zweiten Zonen (16.1, 16.2) eine Messung allein der Kriech-Verformung gestatten.

**3.** Charakterisierungsmfttel nach Anspruch 1 oder 2, bei welchem die tragenden Schenkel (14.1, 14.2) dieselben Abmessungen besitzen.

**4.** Charakterisierungsmittel nach einem der Ansprüche 1 bis 3, bei welchem die tragenden Schenkel (14.1, 14.2) und die nicht-tragenden Schenkel (16.1, 16.2) zwei Markierungen bzw. Zeichen (18.1; 18.2, 20.1, 20,2) aufweisen, die jeweils wenigstens auf einer ihrer die Ausnehmungen (12.1, 12.2, 12.3, 12.4) begrenzenden Seiten bzw. Flächen überstehen bzw. vorspringen.

**5.** Charakterisierungsmittel nach Anspruch 4, bei welchem die Markierungen bzw. Zeichen (18.1, 18.2, 20.1, 20.2) ein spitzenförrniges Profil besitzen.

**6.** Charakterisierungsmittel nach einem der Ansprüche 1 bis 5, welches abgerundete Verbindungsbereiche (9,11) zwischen den beiden Längsenden der genannten tragenden Schenkel (14.1, 14.2) und den Köpfen (4, 6) und zwischen den beiden Enden der nicht-tragenden Schenkel (16.1, 16.2) und den Köpfen (4, 6) umfaßt.

**7.** Charakterisierungsmittel nach Anspruch 6, bei welchem ein Längsende jedes der nicht-tragenden Schenkel (16.1, 16.2) von einem Kopf, mit welchem der Schenkel nicht verbunden ist, jeweils durch einen Abstand (22) auf dem Niveau des entsprechenden abgerundeten Verbindungsbereichs getrennt ist.

**8.** Charakterisierungsmittel nach einem der Ansprüche 1 bis 7, welches Mittel zur Versteifung der Köpfe (4, 6) aufweist.

**9.** Charakterisierungsmittel nach dem vorhergehenden Anspruch, bei welchem die Versteifungsmittel in die Köpfe (4, 6) eingeführte Stopfen (23) bilden.

**10.** Charakterisierungsmittel nach einem der Ansprüche 1 bis 9, bei welchem die tragenden (14.1, 14.2) und die nicht-tragenden Schenkel (16.1, 16.2) im Wege der Elektroerosion mittels Draht erzeugt sind.

**11.** Verfahren zur Charakterisierung bzw. Bestimmung der kriechbedingten und der wachstumsbedingten Verformungsverhaltensweisen eines Elements in einer gegebenen Umgebung, unter Verwendung eines Charakterisierungsmittels gemäß einem der vorhergehenden Ansprüche, wobei das Verfahren die folgenden Stufen umfaßt:

a) Messen der Abmessungen des Charakterisierungsmittels,
b) Instellungbringen des Charakterisierungsmittels in einer zur Reproduktion der gegebenen Umgebung geeigneten Zone,
c) Erzeugen der Bedingungen, deren Einfluß auf das Charakterisierungsmittel man zu messen wünscht,
d) Messen der charakteristischen Abmessungen des Versuchs- bzw. Testmittels,
e) Bestimmen der wachstumsbedingten Verformung mit den Änderungen der Abmessungen der zweiten Tonen, sowie Ableitung der kriech bedingten Verformung mit den Änderungen der Abmessungen der ersten Zonen.

**12.** Verfahren nach dem vorhergehenden Anspruch unter Verwendung des Charakterisierungsmittels nach Anspruch 4 oder 5, bei welchem man in den Stufen b) und d) den Abstand zwischen den an den Schenkeln vorspringenden Markierungen mißt.

**13.** Verfahren nach Anspruch 11 oder 12, bei welchem in der Verfahrensstufe c) die Beanspruchungen die Temperatur, die Bestrahlung und eine mechanische Belastung sind.

**14.** Verfahren nach einem der Ansprüche 11 bis 13, bei weichem man in der Verfahrensstufe e) die kriech bedingte Verformung mit den Änderungen der Abmessungen der zweiten Zonen bestimmt.

# FIG. 1

FIG. 2A    FIG. 2B

FIG. 5

FIG. 3A

FIG. 3B

FIG. 4A

FIG. 4B

FIG. 6A

FIG. 6B

FIG. 6C

FIG. 6D

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2064761

- US 3803365 A

**Littérature non-brevet citée dans la description**

- Influence of Zirconium Alloy Chemical Composition on Microstructure Formation and Irradiation Induced Growth. **V. N. Shishov et al.** Zirconium in the Nuclear Industry : 13th International symposium, ASTM STP 1423. 2002, 758-779
- **V. N. Shishov et al.** Influence of Structure-Phase State of Nb Containing Zr Alloys on Irradiation Induced Growth. *Journal of ASTM International,* Septembre 2005, vol. 2, 8

- **R. A. Holt ; N. Christodoulou ; A. R. Causey.** Anisotropy of in-reactor deformation of Zr-2.5Nb pressure tubes. *Journal of Nuclear Materials,* 2003, vol. 317, 256-260
- **P. Yvon ; J. Diz ; N. Ligneau.** Irradiation creep and growth of guide thimble alloys. *International Symposium of contribution of materials Investigation to the Resolution of Problems Encountered in Pressurized Water Reactors,* 14 Septembre 1998